# FASCICULE DE BREVET EUROPEEN

(11) **EP 4 330 565 B1**
(45) Date de publication et mention de la délivrance du brevet: **26.08.2026**
(21) Numéro de dépôt: 22710677.0
(22) Date de dépôt: 22.02.2022
(51) Int. Cl.: F16H 61/688

(54) **PILOTAGE DES EMBRAYAGES D'UNE TRANSMISSION DCT EN PHASE DE RAMPAGE**
STEUERUNG DER KUPPLUNGEN EINES DOPPELKUPPLUNGSGETRIEBES IN DER KRIECHPHASE
CONTROLLING THE CLUTCHES OF A DUAL-CLUTCH TRANSMISSION IN THE CREEP PHASE

(30) Priorité: 28.04.2021 FR 2104398
(43) Date de publication de la demande: 06.03.2024
(73) Titulaire: Stellantis Auto SAS, 78300 Poissy (FR)
(72) Inventeur: SCHAEFFER, Eric, 75013 PARIS (FR); HABBANI, Ridouane, 92600 ASNIERES SUR SEINE (FR)
(74) Mandataire: PSIP
(86) Numéro de dépôt international: PCT/FR2022/050317
(87) Numéro de publication internationale: WO 2022/229521

(56) Documents cités:
- FR-A1- 2 836 870
- US-A1- 2011 238 276

## Description

### DOMAINE TECHNIQUE DE L'INVENTION

L'invention concerne, de façon générale, le domaine technique des chaînes de traction de véhicules hybrides comprenant une transmission de type DCT.

L'invention se rapporte plus spécifiquement au pilotage des deux embrayages d'une transmission de type DCT équipant un véhicule hybride durant la phase de mise en mouvement aussi appelée phase de rampage. Durant cette phase de rampage un glissement des embrayages permet le déplacement du véhicule sans à-coups à faible vitesse.

La présente invention concerne les transmissions de type DCT, et plus particulièrement celles de type eDCT qui équipent les véhicules hybrides dont l'énergie motrice est générée par deux motorisations distinctes un moteur thermique consommant un carburant fossile, et un moteur électrique alimenté par un ensemble de stockage d'énergie électrique rechargée par la récupération de l'énergie cinétique du véhicule et/ou le branchement du véhicule à une source d'énergie électrique extérieure.

Elle concerne en outre tout autre type de véhicules hybrides équipés d'un moteur thermique et d'un moteur non thermique consommant une énergie conservée dans des moyens de stockage d'énergie permettant de générer une énergie motrice alternativement ou cumulativement à celle générée par le moteur thermique. Cette énergie stockée peut être d'origine électrique, hydraulique ou pneumatique. Lorsque l'énergie stockée est électrique, les moyens de stockage peuvent être des batteries.

L'invention s'applique en particulier au déplacement à faible vitesse des véhicules hybrides, telle que la phase de démarrage ou de rampage du véhicule jusqu'à une vitesse de 10 à 12 km/h. Afin de permettre le déplacement à faible vitesse du véhicule, celui-ci présente une fonction dite de rampage, durant laquelle un glissement a lieu dans le système d'embrayage afin de réguler le couple transmis par au moins un des moteurs du véhicule à au moins un des trains de roue du véhicule selon la consigne de vitesse induite par la pression du pied d'un conducteur sur une pédale d'accélération du véhicule.

### ÉTAT DE LA TECHNIQUE ANTÉRIEURE

Dans la suite de la description, l'exemple de mise en œuvre de l'invention décrit est un véhicule hybride dont la puissance motrice est alternativement ou cumulativement assurée par un moteur thermique et un moteur électrique alimenté en énergie électrique par des batteries. Le moteur thermique et le moteur électrique forment un ensemble moteur dont l'énergie motrice est transmise par un dispositif de transmission de type DCT à un train de roues avants ou arrières. Cet exemple de mise en œuvre de l'invention a été choisi pour faciliter la description de l'invention, sans pour autant qu'elle y soit limitée. En effet, l'invention peut aussi, par exemple, s'appliquer à un véhicule dans lequel l'énergie motrice est transmise à plus qu'un train de roues.

Dans les dispositifs de transmission de type DCT pour véhicules hybrides connus, un dispositif de pilotage permet d'assurer la transmission au train de roues motrices d'un couple moteur généré par le moteur thermique, le moteur électrique ou les deux. Ce dispositif de pilotage gère un premier embrayage reliant l'ensemble moteur à une première boite de vitesse comprenant des rapports de transmission impairs, et un deuxième embrayage reliant l'ensemble moteur à une deuxième boite de vitesse comprenant les rapports de transmission pairs.

Dans les dispositifs de transmission DCT conventionnels, un premier rapport de transmission est engagé dans la première boite de vitesse et le dispositif de pilotage gère le glissement dudit premier embrayage afin d'assurer la transmission du couple moteur au train de roues motrices selon la pression exercée par le conducteur sur la pédale d'accélérateur. Cette phase de glissement de l'embrayage s'appelle la phase de rampage, et elle est destinée à assurer le déplacement du véhicule sans à-coups à faible vitesse. Dans une transmission mécanique, c'est la pression du pied gauche du conducteur sur une pédale d'embrayage qui contrôle le glissement de l'embrayage. La transmission DCT permet de soulager le conducteur du pilotage de l'embrayage. Un deuxième rapport peut être engagé dans ladite deuxième boite de vitesse en prévision du passage du premier rapport au deuxième rapport afin d'augmenter la vitesse du véhicule, mais jusqu'à ce changement de rapport le deuxième embrayage est en position débrayé et la deuxième boite de vitesse est inactive.

Durant ladite phase de rampage, le glissement du premier embrayage génère un échauffement de celui-ci. Ainsi, les températures pouvant être atteintes par l'embrayage induisent des problèmes de surchauffe de l'embrayage qui ne permettent pas de garantir son fonctionnement optimal.

En outre, l'état de la technique est connu des documents US2011238276A1 et FR2836870A1.

En outre, US2011238276A1 divulgue un véhicule selon le préambule de la revendication 1.

### EXPOSÉ DE L'INVENTION

La présente invention a pour but de remédier à tout ou partie des problèmes de surchauffe des embrayages dans les dispositifs de transmission DCT durant la phase de rampage.

À cet effet, l'objectif de l'invention est de limiter l'échauffement du premier embrayage.

À cette fin, selon un premier aspect de l'invention, il est proposé un véhicule comprenant une transmission de type DCT et un dispositif de pilotage de cette transmission de type DCT, la transmission de type DCT comprenant une première boite de vitesse reliée à un ensemble moteur par un premier embrayage, et une deuxième boite de vitesse reliée audit ensemble moteur par un deuxième embrayage. Ledit dispositif de pilotage comprend des moyens de contrôle du glissement desdits premier et deuxième embrayages assurant la répartition de la transmission d'une puissance motrice délivrée par l'ensemble moteur entre ladite première et ladite deuxième boite de vitesses lorsque la température du premier embrayage atteint un seuil de température prédéfinie, un rapport étant engagé dans chacune desdites première et deuxième boites de vitesses et les moyens de contrôle du glissement du dispositif de pilotage gère le glissement desdits premier et deuxième embrayages de sorte que la puissance motrice transmise par l'ensemble moteur est progressivement transférée du premier embrayage au deuxième embrayage, la vitesse de rotation d'un arbre moteur de l'ensemble moteur étant augmentée de manière à augmenter le glissement desdits premier et deuxième embrayages.

Ainsi, l'entrée en action du deuxième embrayage pour transmettre une partie de la puissance motrice délivrée par l'ensemble moteur limite la montée en température dudit premier embrayage au seuil prédéfini.

Cette gestion du glissement des embrayages permet la transmission de la puissance motrice délivrée par les deux boites de vitesses au même train de roues motrices bien que des rapports présentant des démultiplications différentes soient engagés dans la première et la deuxième boite de vitesse.

Préférentiellement, un premier rapport est engagé dans ladite première boite de vitesse, un deuxième rapport est engagé dans ladite deuxième boite de vitesse, et les moyens de contrôle du glissement du dispositif de pilotage amorce une phase de rampage durant laquelle la puissance motrice de l'ensemble moteur est transmise par le glissement dudit premier embrayage, et lorsque ledit premier embrayage atteint le seuil de température prédéfini, la puissance motrice est transmise par le glissement du premier embrayage et du deuxième embrayage.

Cette combinaison de caractéristiques permet de limiter l'échauffement du premier embrayage durant une phase de démarrage ou de rampage.

Selon un deuxième aspect de l'invention, il est proposé un procédé de pilotage d'une transmission de type DCT d'un véhicule, la transmission de type DCT comprenant une première boite de vitesse reliée à un ensemble moteur par un premier embrayage, et une deuxième boite de vitesse reliée audit ensemble moteur par un deuxième embrayage, dans lequel une puissance motrice d'un ensemble moteur est transmise à une première boite de vitesse par le glissement d'un premier embrayage, et lorsque la température dudit premier embrayage atteint un seuil de température prédéfini, un rapport étant engagé dans chacune desdites première et deuxième boites de vitesses, ladite puissance motrice est répartie entre ladite première boite de vitesse et la deuxième boite de vitesse par le glissement dudit premier embrayage et le glissement d'un deuxième embrayage.

Ce procédé permet d'éviter une surchauffe du premier embrayage en faisant transiter une partie de la puissance motrice par le deuxième embrayage.

Préférentiellement, le glissement dudit premier embrayage et dudit deuxième embrayage est contrôlé de sorte que la puissance motrice transmise par l'ensemble moteur est progressivement transférée du premier embrayage au deuxième embrayage.

Ainsi, bien que des rapports différents soient engagés dans les boites de vitesse, le glissement des deux embrayages compense les différences de vitesse de rotation entre l'arbre moteur, et les premier et deuxième arbres primaires.

Avantageusement, la vitesse de rotation d'un arbre moteur de l'ensemble moteur est augmentée de manière à augmenter le glissement dudit premier embrayage et dudit deuxième embrayage.

L'augmentation substantielle de la vitesse de rotation de l'arbre moteur permet de maintenir la puissance motrice transmise au train de roues motrices malgré l'accroissement des pertes dues au glissement des deux embrayages.

Préférentiellement, à la suite de l'enclenchement du glissement dudit deuxième embrayage, lorsque ledit premier embrayage a atteint le seuil de température prédéfini, la puissance de l'ensemble moteur transite progressivement du premier embrayage au deuxième embrayage jusqu'à n'être plus transmise que par le deuxième embrayage.

Le passage progressif de la puissance motrice du premier embrayage au deuxième embrayage permet de gérer la phase de rampage permettant le démarrage du véhicule et le passage sans à-coups du premier ou deuxième rapport.

D'autres caractéristiques et avantages de l'invention sont mis en évidence par la description ci-après d'exemples non limitatifs de réalisation des différents aspects de l'invention, telle que définie par les revendications ci-jointes.

### BRÈVE DESCRIPTION DES FIGURES

La description se réfère aux figures annexées qui sont aussi données à titre d'exemples non limitatifs de réalisation de l'invention :
[Fig. 1] la figure 1 montre schématiquement une chaîne de transmission entre un ensemble moteur et un train de roues motrices ; et
[Fig. 2] la figure 2 montre sous la forme de diagrammes l'évolution des paramètres critiques lors de la phase de rampage.

### DESCRIPTION DÉTAILLÉE D'UN MODE DE RÉALISATION

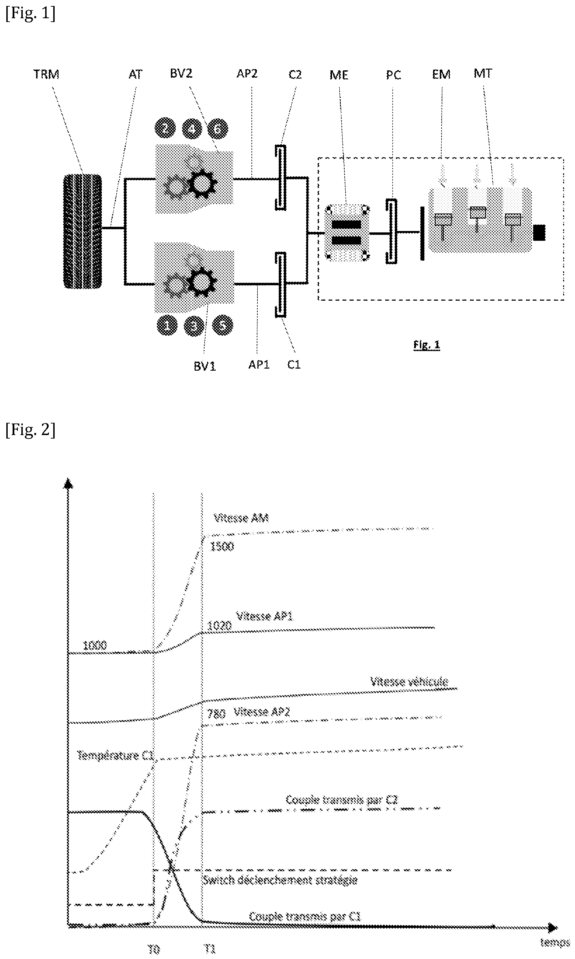

La figure 1 [Fig. 1] illustre le dispositif de transmission reliant un ensemble moteur EM à un train de roues motrices TRM. L'ensemble moteur EM comprend un moteur thermique MT dont un arbre de sortie AS en aval d'un volant d'inertie VI est relié à un embrayage primaire PC. Un moteur électrique ME est relié en aval de l'embrayage primaire. L'embrayage primaire PC permet de solidariser ou de désolidariser en rotation le moteur thermique MT du moteur électrique ME. Ainsi, lorsque le moteur thermique MT est en action, celui-ci entraîne en rotation le moteur électrique qui fait office de générateur électrique pour charger les batteries. Lorsque le moteur électrique ME prend la relève du moteur thermique MT l'embrayage primaire est débrayé afin de soulager le moteur électrique ME qui n'entraîne pas en rotation le moteur thermique MT. L'embrayage primaire peut être embrayé afin que le moteur électrique ME contribue avec le moteur thermique au déplacement du véhicule.

En sortie du moteur électrique, un arbre moteur AM relie en rotation l'ensemble moteur EM à un premier embrayage C1 et à un deuxième embrayage C2. Le premier embrayage C1 assure en position embrayée la transmission de l'énergie motrice à une première boite de vitesse BV1 comprenant des rapports de transmission impairs, ici, un premier, un troisième et un cinquième rapport. Le deuxième embrayage C2 assure en position embrayée la transmission de l'énergie motrice à une deuxième boite de vitesse BV2 comprenant des rapports de transmission pairs, ici, un deuxième, un quatrième et un sixième rapport. La première boite de vitesse BV1 et la deuxième boite de vitesse sont solidaires en rotation d'un arbre de transmission AT entraînant en rotation le train de roues motrices TRM.

Un dispositif de pilotage de la transmission de type DCT (non illustré) commande l'actionnement du premier embrayage C1 et du deuxième embrayage C2, de manière à ce que, selon la vitesse du véhicule et une consigne de vitesse transmise par la pression du pied droit du conducteur sur une pédale d'accélérateur, l'énergie motrice provenant de l'élément moteur EM soit transmise au train de roues motrices TRM par la première boite de vitesse BV1 ou la deuxième boite de vitesse BV2. Lors du passage à un rapport supérieur, ou du rétrogradage à un rapport inférieur, le dispositif de pilotage contrôle le glissement du premier embrayage C1 ou du deuxième embrayage C2 afin d'éviter les à-coups de transmission engendrés par le changement de couple moteur ou résistant transmis au train de roues motrices.

Lors du démarrage du véhicule, la mise en mouvement progressive de celui-ci est assurée par le glissement du premier embrayage C1 relié à la première boite de vitesse BV1 dans laquelle le premier rapport est engagé. Le dispositif de pilotage comprend des moyens de contrôle (non illustrés) aptes à contrôler le glissement du premier embrayage C1 pour que le couple souhaité soit transmis au train de roues motrices TRM durant la phase de démarrage ou phase de rampage. Le glissement de l'embrayage C1 durant la phase de rampage entraîne une élévation de la température du premier embrayage C1 qui peut engendrer une surchauffe de celui-ci et le détériorer ou en dégrader le fonctionnement.

La figure 2 [Fig. 2] illustre à travers plusieurs diagrammes le fonctionnement du dispositif de contrôle du glissement dudit premier embrayage C1 et dudit deuxième embrayage (C2) pendant la phase de rampage. Un seuil de température du premier embrayage C1 est défini afin d'éviter son échauffement au-delà de ce seuil. Comme illustré par la courbe « Température C1 » à la figure 2 [Fig. 2], lorsque le premier embrayage C1 atteint ce seuil de température à un instant T0, une consigne est transmise au dispositif de pilotage qui enclenche une stratégie de transmission du couple au train de roues motrices TRM par la première boite de vitesse BV1 et la deuxième boite de vitesse BV2 dans laquelle le deuxième rapport de transmission est engagé. Le déclenchement de cette phase de rampage de la transmission DCT est illustré par la courbe « Switch déclenchement stratégie ». Ainsi durant la phase de rampage, à partir de l'instant T0, le dispositif de contrôle du dispositif de pilotage gère le glissement du premier embrayage C1 et du deuxième embrayage C2 de manière à ce que la puissance motrice transmise par l'ensemble moteur EM au train de roues motrices TRM soit répartie entre le premier embrayage C1 et le deuxième embrayage C2 jusqu'à un instant T1 où le couple sera transmis au train de roues motrices TRM substantiellement par le deuxième embrayage C2. Ainsi, la puissance motrice transmise par l'ensemble moteur EM est progressivement transférée du premier embrayage C1 au deuxième embrayage C2, ce qui permet assurer une augmentation de vitesse progressive et sans à coup de transmission durant la phase de rampage. Les diagrammes « couple transmis par C1 » et « couple transmis par C2 » montrent la transition de la transmission de la puissance motrice au train de roues motrices TRM du premier embrayage C1 au deuxième embrayage C2 entre les instants T0 et T1.

Le dispositif de contrôle du glissement gère le glissement du premier embrayage C1 et du deuxième embrayage C2 pour respecter la démultiplication du premier rapport engagé dans la première boite de vitesse BV1 et du deuxième rapport engagé dans la deuxième boite de vitesse BV2 tout en assurant le déplacement du véhicule à la vitesse souhaitée par le conducteur dont l'évolution est illustrée par la courbe « Vitesse véhicule ». À titre d'exemple, la figure 2 [Fig. 2] montre les fluctuations des vitesses de rotation du premier arbre primaire AP1, du deuxième arbre primaire AP2 et de l'arbre moteur AM en fonction du temps. Entre les instants T0 et T1, la vitesse de rotation du premier arbre primaire AP1 passe de 1000 à 1020 t/mn, voir la courbe « Vitesse AP1 », alors que la vitesse de rotation du deuxième arbre primaire AP2 augmente par exemple d'un régime initial lié à l'entrainement des roues qui remonte via la deuxième boite de vitesse BV2 et du rapport pré engagé jusqu'au deuxième arbre primaire AP2 lorsque le deuxième embrayage C2 est ouvert jusque 780 t/mn, voir la courbe « Vitesse AP2 ».

Comme illustré à la figure 2 [Fig. 2], le dispositif de contrôle du glissement du dispositif de pilotage assure que le glissement du premier embrayage C1 et du deuxième embrayage C2 permettent d'obtenir des vitesses de rotation du premier arbre primaire AP1 et du deuxième arbre primaire AP2 compatibles avec celle de l'arbre de transmission AT. En parallèle, la vitesse de l'arbre moteur AM augmente substantiellement pour créer un glissement important dans le premier embrayage C1 et le deuxième embrayage C2. Par exemple, comme illustrée par la courbe « Vitesse AM » dans la figure 2 [Fig. 2], la vitesse de rotation de l'arbre moteur AM passe de 1000 t/mn à 1500 t/mn entre les instants T0 et T1 alors que dans le même intervalle de temps la vitesse de rotation dudit premier arbre primaire AP1 ne s'élève que de 1000 à 1020 t/mn et celle dudit deuxième arbre primaire AP2 n'atteint que 780 t/mn.

Le dispositif de pilotage de la transmission DCT décrite ci-dessus contrôle le glissement du premier embrayage C1 et du deuxième embrayage C2, et la transmission de puissance au train de roues motrices TRM par l'ensemble moteur EM selon un procédé décrit ci-dessous sur la base des diagrammes de la figure 2 [Fig. 2].

Lors de la phase de rampage, le dispositif de contrôle du glissement des embrayages gère le glissement du premier embrayage C1 pour transmettre au train de roues motrices TRM la puissance motrice nécessaire pour déplacer le véhicule à la vitesse souhaitée par le conducteur dont l'évolution est illustrée par la courbe « Vitesse véhicule ». Le glissement du premier embrayage C1 génère un échauffement de celui-ci illustré par la courbe « Température C1 ». À l'instant T0, le premier embrayage C1 atteint le seuil de température prédéfini, ce qui entraîne le déclenchement de la stratégie de limitation de l'échauffement du premier embrayage C1 comme illustré par la courbe « Switch déclenchement stratégie ». Le déclenchement de cette stratégie conduit le dispositif de contrôle du glissement à faire glisser le deuxième embrayage C2 en parallèle du premier embrayage C1. Le glissement du premier embrayage C1 et du deuxième embrayage C2 est géré entre les instants T0 et T1 par le dispositif de contrôle du glissement pour répartir la transmission de la puissance motrice au train de roues motrices TRM entre la première boite de vitesse BV1 et la deuxième boite de vitesse BV2. L'évolution du couple moteur transmis au train de roues motrices TRM par le premier embrayage C1 et le deuxième embrayage C2 est illustrée par les courbes « Couple transmis par C1 » et « Couple transmis par C2 ». Entre les instants T0 et T1, le couple moteur transmis par le premier embrayage C1 diminue jusqu'à devenir nul à l'instant T1, alors que le couple moteur transmis par le deuxième embrayage C2 qui est nul à T0 augmente jusqu'à l'instant T1.

Le dispositif de contrôle du glissement des embrayages gère le glissement du premier embrayage C1 et du deuxième embrayage C2 afin de respecter les vitesses de rotation du premier arbre primaire AP1 et du deuxième arbre primaire AP2 déterminées par la vitesse de rotation de l'arbre de transmission AT nécessaire pour que le véhicule se déplace à la vitesse souhaitée par le conducteur telle qu'illustrée par la courbe « Vitesse du véhicule ». Le véhicule étant en phase d'accélération, la vitesse de rotation du premier arbre primaire AP1 augmente de 1000 à 1020 t/mn entre l'instant T0 et l'instant T1 comme illustré par la courbe « Vitesse AP1», et en parallèle la vitesse de rotation du deuxième arbre primaire AP2 passe du régime initial lié à l'entrainement des roues qui remonte via la deuxième boite de vitesse BV2 et du rapport pré engagé jusqu'au deuxième arbre primaire AP2 lorsque le deuxième embrayage C2 est ouvert à 780 t/mn entre l'instant T0 et l'instant T1, comme illustré par la courbe « Vitesse AP2 ». Entre les instants T1 et T0, la vitesse de rotation de l'arbre moteur AM augmente considérablement plus que celle des premier et deuxième arbres primaires C1 et C2. Elle passe de 1000 t/mn à 1500 t/mn de manière à obtenir un glissement important au niveau du premier embrayage C1 et du deuxième embrayage C2. Ainsi, l'augmentation substantielle de la vitesse de rotation de l'arbre moteur AM permet de maintenir la puissance motrice transmise au train de roues motrices TRM malgré l'accroissement des pertes dues au glissement des deux embrayages C1 et C2.

Les valeurs de vitesse de rotation mentionnées ci-dessus ne sont données qu'à titre illustratif de la gestion des embrayages C1 et C2 et de l'ensemble moteur EM par le dispositif de contrôle conformément à la stratégie permettant d'éviter la surchauffe du premier embrayage C1 en répartissant la puissance motrice à transmettre au train de roue motrice TRM entre le premier embrayage C1 et le deuxième embrayage C2.

Naturellement, l'invention est décrite dans ce qui précède à titre d'exemple. Il est entendu que l'homme du métier est à même de réaliser différentes variantes de réalisation de l'invention sans pour autant sortir du cadre de l'invention, telle que définie par les revendications ci-jointes.

## Revendications

1. Véhicule comprenant une transmission de type DCT et un dispositif de pilotage de cette transmission de type DCT, la transmission de type DCT comprenant : une première boite de vitesse (BV1) reliée à un ensemble moteur (EM) par un premier embrayage (C1), et une deuxième boite de vitesse (BV2) reliée audit ensemble moteur (EM) par un deuxième embrayage (C2) ; le dispositif de pilotage comprend des moyens de contrôle du glissement desdits premier et deuxième embrayages (C1, C2) assurant la répartition de la transmission d'une puissance motrice délivrée par l'ensemble moteur (EM) entre lesdites première et deuxième boites de vitesses (BV1, BV2) lorsque la température du premier embrayage (C1) atteint un seuil de température prédéfini, un rapport étant engagé dans chacune desdites première et deuxième boites de vitesses (BV1, BV2), les moyens de contrôle du glissement du dispositif de pilotage gère le glissement desdits premier et deuxième embrayages (C1, C2) de sorte que la puissance motrice transmise par l'ensemble moteur (EM) est progressivement transférée du premier embrayage (C1) au deuxième embrayage (C2),
**caractérisé en ce que**
la vitesse de rotation d'un arbre moteur (AM) de l'ensemble moteur (EM) étant augmentée de manière à accroitre le glissement desdits premier et deuxième embrayages (C1, C2).

2. Véhicule selon la revendication 1, **caractérisé en ce qu'**un premier rapport est engagé dans ladite première boite de vitesse (BV1), un deuxième rapport est engagé dans ladite deuxième boite de vitesse (BV2), et les moyens de contrôle du glissement du dispositif de pilotage initie une phase de rampage durant laquelle :
- la puissance motrice de l'ensemble moteur (EM) est transmise par le glissement dudit premier embrayage (C1), et
- lorsque ledit premier embrayage (C1) atteint le seuil de température prédéfini, la puissance motrice est transmise par le glissement du premier embrayage (C1) et du deuxième embrayage (C2).

3. Procédé de pilotage d'une transmission de type DCT d'un véhicule, la transmission de type DCT comprenant une première boite de vitesse (BV1) reliée à un ensemble moteur (EM) par un premier embrayage (C1), et une deuxième boite de vitesse (BV2) reliée audit ensemble moteur (EM) par un deuxième embrayage (C2), dans lequel une puissance motrice d'un ensemble moteur (EM) est transmise à une première boite de vitesse (BV1) par le glissement d'un premier embrayage (C1), et lorsque la température dudit premier embrayage (C1) atteint un seuil de température prédéfini, un rapport étant engagé dans chacune desdites première et deuxième boites de vitesses (BV1, BV2), ladite puissance motrice est répartie entre ladite première boite de vitesse (BV1) et ladite deuxième boite de vitesse (BV2) par le glissement dudit premier embrayage (C1) et le glissement d'un deuxième embrayage (C2), dans lequel le glissement dudit premier embrayage (C1) et dudit deuxième embrayage (C2) est contrôlé de sorte que la puissance motrice transmise par l'ensemble moteur (EM) est progressivement transférée du premier embrayage (C1) au deuxième embrayage (C2), la vitesse de rotation d'un arbre moteur (AM) de l'ensemble moteur (EM) étant augmentée de manière à accroitre le glissement dudit premier embrayage (C1) et dudit deuxième embrayage (C2).

4. Procédé de pilotage d'une transmission de type DCT selon la revendication 3, dans lequel à la suite de l'enclenchement du glissement dudit deuxième embrayage (C2), lorsque ledit premier embrayage (C1) a atteint le seuil de température prédéfini, la puissance de l'ensemble moteur (EM) transite progressivement du premier embrayage (C1) au deuxième embrayage(C2) jusqu'à n'être plus transmise que par le deuxième embrayage (C2).

## Patentansprüche

1. Fahrzeug mit einem DCT-Getriebe und einer Steuervorrichtung für das DCT-Getriebe, wobei das DCT-Getriebe umfasst: ein erstes Getriebe (BV1), das mit einer Motorbaugruppe (EM) durch eine erste Kupplung (C1) verbunden ist, und ein zweites Getriebe (BV2), das mit der Motorbaugruppe (EM) durch eine zweite Kupplung (C2) verbunden ist; wobei die Steuervorrichtung Mittel zum Steuern des Schlupfes der ersten und zweiten Kupplung (C1, C2) umfasst, die die Verteilung des Getriebes einer von der Motorbaugruppe (EM) gelieferten Motorleistung zwischen dem ersten und dem zweiten Getriebe sicherstellen (BV1, BV2) wenn die Temperatur der ersten Kupplung (C1) einen vorgegebenen Temperaturschwellenwert erreicht, wobei in jedem der ersten und zweiten Getriebe (BV1, BV2) ein Gang eingeschaltet ist, steuern die Steuermittel den Schlupf der ersten und zweiten Kupplung (C1, C2) so, dass die von der Motorbaugruppe (EM) übertragene Antriebsleistung von der ersten Kupplung (C1) nach und nach auf die zweite Kupplung (C2) übertragen wird,
**dadurch gekennzeichnet, dass**
die Drehzahl einer Motorwelle (AM) der Motorbaugruppe (EM) erhöht wird, um den Schlupf der ersten und zweiten Kupplung (C1, C2) zu erhöhen.

2. Fahrzeug nach Anspruch 1, **dadurch gekennzeichnet, dass** ein erster Gang in das erste Getriebe (BV1) eingelegt ist, ein zweiter Gang in das zweite Getriebe (BV2) eingelegt ist, und die Steuermittel für das Schlupf der Steuervorrichtung eine Schlupfphase einleiten, während der:
- die Antriebsleistung der Antriebseinheit (EM) wird durch den Schlupf der ersten Kupplung (C1) übertragen, und
- Wenn die erste Kupplung (C1) die vorgegebene Temperaturschwelle erreicht, wird die Antriebsleistung durch Schlupf der ersten Kupplung (C1) und der zweiten Kupplung (C2) übertragen.

3. Verfahren zur Steuerung eines DCT-Getriebes eines Fahrzeugs, wobei das DCT-Getriebe ein erstes umfasst
Getriebe (BV1), das über eine erste Kupplung (C1) mit einer Motorbaugruppe (EM) verbunden ist, und ein zweites Getriebe (BV2), das über eine zweite Kupplung (C2) mit der Motorbaugruppe (EM) verbunden ist, wobei eine Antriebsleistung einer Motorbaugruppe (EM) durch ein Gleiten einer ersten Kupplung (C1) auf ein erstes Getriebe (BV1) übertragen wird, und wobei, wenn die Temperatur der ersten Kupplung (C1) einen vorgegebenen Temperaturschwellenwert erreicht, ein Verhältnis in jedem der ersten und zweiten Getriebe (BV1, BV2) eingeschaltet wird, die Antriebsleistung zwischen dem ersten Getriebe aufgeteilt wird Getriebe (BV1) und das zweite Getriebe (BV2) durch Schlupf der ersten Kupplung (C1) und Schlupf einer zweiten Kupplung (C2), wobei das Schlupf der ersten Kupplung (C1) und der zweiten Kupplung (C2) gesteuert wird, sodass die von der Motorbaugruppe (EM) übertragene Antriebsleistung von der ersten Kupplung (C1) nach und nach auf die zweite Kupplung (C2) übertragen wird, wobei die Drehzahl einer Antriebswelle (AM) der Motorbaugruppe (EM) erhöht wird, um den Schlupf der ersten Kupplung zu erhöhen (C1) und der zweiten Kupplung (C2).

4. Verfahren zum Steuern eines DCT-Getriebes nach Anspruch 3, wobei nach dem Eingreifen des Schlupfes der zweiten Kupplung (C2), wenn die erste Kupplung (C1) den vorbestimmten Temperaturschwellenwert erreicht hat, die Leistung der Motorbaugruppe (EM) allmählich von der ersten Kupplung (C1) zur zweiten Kupplung (C2) übergeht, bis sie nur noch von der zweiten Kupplung (C2) übertragen wird.

## Claims

1. Vehicle comprising a transmission of the DCT type and a device for controlling this transmission of the DCT type, the transmission of the DCT type comprising: a first gear box (BV 1) connected to an engine assembly (EM) by a first clutch (C 1), and a second gear box (BV2) connected to said engine assembly (EM) by a second clutch (C2); the control device comprises means for controlling the slippage of said first and second clutches (C1, C2) ensuring the distribution of the transmission of a driving power delivered by the engine assembly (EM) between said first and second gear boxes (BV1, BV2) when the temperature of the first clutch (C1) reaches a predefined temperature threshold, a report being engaged in each of said first and second gear boxes (BV1, BV2), the means for controlling the slippage of the control of the slippage of the first slippage of the control device of said first slippage second clutches (C1, C2) such that the driving power transmitted by the engine assembly (EM) is progressively transferred from the first clutch (C1) to the second clutch (C2),
**characterised in that**
the rotational speed of a drive shaft (AM) of the engine assembly (EM) being increased so as to increase the sliding of said first and second clutches (C1, C2).

2. Vehicle according to claim 1, wherein a first report is engaged in said first gear box, a second report is engaged in said second gear box, and the means for controlling the slippage of the control device initiates a crawling phase during which:
- the driving power of the engine assembly is transmitted by the sliding of said first clutch; and
- when said first clutch (C1) reaches the predefined temperature threshold, the driving power is transmitted by the sliding of the first clutch (C1) and of the second clutch (C2).

3. Method for controlling a DCT type transmission of a vehicle, the DCT type transmission comprising a first
gear box (BV 1) connected to an engine assembly (EM) by a first clutch (C1), and a second gear box (BV2) connected to said engine assembly (EM) by a second clutch (C2), in which a driving power of an engine assembly (EM) is transmitted to a first gear box (BV1) by the sliding of a first clutch (C1), and when the temperature of said first clutch (C1) reaches a predefined temperature threshold, a report being engaged in each of said first and second gear boxes (BV1, BV2), said driving power is distributed between said first gear box (BV1) and said second gear box (BV2) by the sliding of said first clutch (C1) and the sliding of said second clutch (C2) (C2) is on dock so that the driving power transmitted by the engine assembly (EM) is progressively transferred from the first clutch (C1) to the second clutch (C2), the rotational speed of a drive shaft (AM) of the engine assembly (EM) being increased so as to increase the sliding of said first clutch (C1) and said second clutch (C2).

4. Method for controlling a DCT type transmission according to claim 3, wherein, following the triggering of the sliding of said second clutch (C2), when said first clutch (C1) has reached the predefined temperature threshold, the power of the engine assembly (EM) passes progressively from the first clutch (C1) to the second clutch (C2) until it is no longer transmitted by the second clutch (C2).
